# FASCICULE DE BREVET EUROPEEN

(11) **EP 3 283 413 B1**
(45) Date de publication et mention de la délivrance du brevet: **27.02.2019**
(21) Numéro de dépôt: 16720455.1
(22) Date de dépôt: 12.04.2016
(51) Int. Cl.: B65G 47/14, B29C 49/42

(54) **DISPOSITIF D'ALIGNEMENT ET DE REDRESSEMENT DE PRÉFORMES COMPORTANT UN BOL DE CENTRIFUGEUSE ÉQUIPÉ D'UN AMORTISSEUR**
VORRICHTUNG ZUM AUSRICHTEN UND AUFRICHTEN VON VORFORMEN MIT EINER SCHALENZENTRIFUGE MIT EINEM DÄMPFER
DEVICE FOR ALIGNING AND RIGHTING PREFORMS, COMPRISING A BOWL CENTRIFUGE EQUIPPED WITH A DAMPER

(30) Priorité: 16.04.2015 FR 1553373
(43) Date de publication de la demande: 21.02.2018
(73) Titulaire: Sidel Participations, 76930 Octeville-sur-Mer (FR)
(72) Inventeur: DOUDEMENT, Denis, 76930 Octeville-sur-mer (FR); DEBRIS, Anthony, 76930 Octeville-sur-mer (FR); WILLIG, Frédéric, 76930 Octeville-sur-mer (FR); MAZO, Eric, 76930 Octeville-sur-mer (FR)
(74) Mandataire: Grassin d'Alphonse, Emmanuel Jean Marie
(86) Numéro de dépôt international: PCT/FR2016/050835
(87) Numéro de publication internationale: WO 2016/166460

(56) Documents cités:
- DE-A1-102005 048 126
- DE-A1-102011 050 843
- US-A- 5 372 236
- US-A- 5 443 149

## Description

### DOMAINE TECHNIQUE DE L'INVENTION

L'invention concerne un dispositif d'alignement en une file et de redressement de préformes, le dispositif comportant un bol de centrifugeuse comportant :
- un plateau circulaire horizontal tournant autour d'un axe vertical ;
- une rambarde périphérique fixe ;
- un premier secteur angulaire d'alignement du bol de centrifugeuse comprenantau moins une portion de réception destinée à retenir le corps des préformes sur le plateau tournant et à l'intérieur du bol ;
- un déversoir de préformes qui déverse les préformes en vrac sur le plateau tournant en direction de la portion de réception de la rambarde ;
- un deuxième secteur angulaire de redressement du bol de centrifugeuse comportant des moyens de redressement desdites préformes.

### ARRIERE PLAN TECHNIQUE DE L'INVENTION

Le dispositif est destiné à être mis en oeuvre dans une installation de fabrication de récipients en matériau thermoplastique, notamment en polyéthylène téréphtalate (PET), par formage, notamment par soufflage ou étirage-soufflage, de préformes. Une telle installation permet de produire des récipients en très grande série à des cadences très élevées, par exemple supérieures à 85000 bouteilles par heure.

Selon une technique bien connue, de tels récipients sont produits en deux étapes principales. Dans une première étape, on procède au moulage par injection d'une préforme en PET. Cette préforme comporte un corps sensiblement tubulaire qui est fermé à l'une de ses extrémités axiales, encore appelée fond, l'extrémité opposée étant ouverte par l'intermédiaire d'un col. Le col présente, dès cette opération de moulage par injection, la forme définitive du col du récipient. Généralement, le col du récipient comporte un filetage.

La préforme comporte généralement une face annulaire de support qui fait saillie radialement vers l'extérieur par rapport au reste du corps et qui est orientée axialement vers l'extrémité fermée du corps. Une telle face de support est par exemple portée par une collerette de support annulaire qui s'étend radialement en saillie vers l'extérieur par rapport au reste de la préforme et qui est agencée à la base du col.

Il existe des installations dans lesquelles les préformes, une fois injectées, sont directement transmises vers la station de formage, chaque préforme étant transportée individuellement.

Toutefois, dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Dans le cas où la station d'injection et l'installation de fabrication par formage sont deux machines totalement indépendantes, les préformes sont généralement livrées en vrac. La station de soufflage dispose donc d'un dispositif d'alimentation en préformes qui est équipé d'un dispositif d'alignement en une file et de redressement des préformes. La présente invention concerne un tel dispositif.

On a déjà proposé un dispositif d'alignement et de redressement comportant un bol de centrifugeuse. Les préformes sont jetées en vrac sur un plateau tournant formant le fond du bol. Les préformes sont ensuite projetées par la force centrifuge contre une rambarde périphérique.

Les préformes sont plus particulièrement délivrées par l'intermédiaire d'un déversoir qui déverse un flux de préformes en vrac en direction d'une section de réception de la rambarde.

Un espace vertical réservé entre la rambarde et le plateau tournant permet le passage du corps des préformes tout en les retenant par leur collerette. Les préformes sont ainsi alignées à la périphérie du bol, leur axe principal présentant une orientation sensiblement radiale sous l'effet de la force centrifuge. Les préformes présentent ainsi un axe qui s'étend sensiblement orthogonalement à la fois à la direction de la gravité et à la direction de déplacement des préformes.

Les préformes ainsi alignées et orientées sont ensuite entraînées vers une sortie tangentielle du bol sous l'effet du mouvement de rotation du plateau tournant.

Cependant, lorsque les préformes sont délivrées par le déversoir, elles rebondissent plusieurs fois contre la rambarde avant d'enfin se stabiliser en position alignée avec les autres préformes. Durant leurs rebonds, les préformes sont en même temps entraînées en rotation par le plateau tournant dans la direction tangentielle. Ainsi, il est nécessaire de prévoir un secteur angulaire, dit d'alignement, relativement important dans le bol de centrifugeuse, dans lequel les préformes se déplacent de manière aléatoire sur le plateau avant d'être alignées contre la rambarde.

Or, le secteur angulaire restant du bol de centrifugeuse, c'est-à-dire celui non occupé par le secteur d'alignement, doit présenter une longueur périphérique suffisamment importante pour permettre le redressement des préformes et le triage entre les préformes correctement alignées et les préformes incorrectement alignées.

Parmi les solutions proposées, on peut allonger le parcours des préformes dans le bol de centrifugeuse. Cependant, cette solution n'est pas satisfaisante car le bol devient alors très encombrant et, de plus, le temps de parcours des préformes est augmenté, ce qui retarde le démarrage de l'installation de fabrication entre le moment où les premières préformes sont déversées et le moment où elles atteignent la sortie du bol de centrifugeuse.

Le document DE 10 2005 048126 A1 décrit un dispositif d'alignement en une file et de redressement de préformes selon le préambule de la revendication 1.

Le document US 5 443 149 A décrit un dispositif d'alignement de bouteilles équipé d'une paroi revêtue d'un matériau anti-choc.

### BREF RESUME DE L'INVENTION

L'invention propose un dispositif d'alignement en une file et de redressement de préformes selon la revendication 1.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective, qui représente schématiquement un dispositif d'alignement et de redressement de préformes comportant un bol de centrifugeuse conformément aux enseignements de l'invention ;
- la figure 2 est une vue de face, qui représente une préforme adaptée pour être utilisée avec le dispositif de la figure 1, l'axe de la préforme étant ici orienté verticalement ;
- la figure 3 est une vue de dessus, qui représente le bol de centrifugeuse de la figure 1 ;
- la figure 4 est une vue en coupe radiale d'un secteur d'alignement du bol de centrifugeuse de la figure 1, qui représente la rambarde périphérique et le plateau tournant du bol de centrifugeuse ainsi qu'une préforme alignée ;
- la figure 5 est une vue en perspective, qui représente un déversoir du dispositif de la figure 1 ;
- la figure 6 est une vue de dessus, qui représente une partie du secteur d'alignement du bol de centrifugeuse, ainsi que les différentes étapes du parcours d'une préforme déversée dans le bol de centrifugeuse ;
- la figure 7 est une vue en coupe radiale d'un secteur de redressement du bol de centrifugeuse de la figure 1, qui représente la rambarde périphérique et le plateau tournant du bol de centrifugeuse ainsi qu'une préforme alignée et redressée ;
- la figure 8 est une vue schématique selon une direction radiale, qui représente une préforme alignée le long de la rambarde dans le secteur d'alignement du bol de centrifugeuse de la figure 1 ;
- la figure 9 est une vue de dessus de la figure 8 ;
- la figure 10 est une vue similaire à celle de la figure 8, qui représente la préforme de la figure 8 en cours de redressement au début du secteur de redressement du bol de centrifugeuse de la figure 1 ;
- la figure 11 est une vue de dessus de la figure 10 ;
- la figure 12 est une vue similaire à celle de la figure 10, qui représente la préforme de la figure 10 redressée dans le secteur de redressement du bol de centrifugeuse de la figure 1 ;
- la figure 13 est une vue de dessus de la figure 12 ;
- la figure 14 est une vue de dessus, qui représente une zone du bol de centrifugeuse de la figure 1 située à cheval sur le secteur de redressement et sur un secteur de triage et qui comporte une roue démêleuse primaire en train d'écarter une préforme mal alignée ;
- la figure 15 est une vue en coupe radiale du bol passant par l'axe de rotation de la roue démêleuse primaire, qui représente la roue démêleuse primaire de la figure 14 ;
- la figure 16 est une vue de dessus, qui représente une partie aval du secteur de triage du bol de centrifugeuse de la figure 1 et qui comporte une roue démêleuse secondaire en train d'écarter une préforme mal alignée ;
- la figure 17 est une vue en coupe radiale du bol passant par l'axe de rotation de la roue démêleuse secondaire, qui représente la roue démêleuse secondaire de la figure 16 ;
- la figure 18 est une vue en coupe radiale d'une portion de réception de la rambarde du bol de centrifugeuse qui représente un amortisseur réalisé selon un premier mode de réalisation de l'invention ;
- la figure 19 est une vue en coupe radiale d'une portion de réception de la rambarde du bol de centrifugeuse, qui représente un amortisseur réalisé selon un deuxième mode de réalisation de l'invention.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations locales suivantes pour chaque préforme présente dans le bol de centrifugeuse du dispositif :
- radiale "R" dirigée de l'intérieur vers l'extérieur depuis l'axe de rotation du plateau tournant ;
- tangentielle "T" qui est orthogonale à la direction radiale "R" et qui s'étend dans le plan du plateau tournant, dirigée d'amont en aval selon le sens de rotation du plateau tournant ;
- verticale "V" dirigée de bas en haut selon le sens inverse de la gravité terrestre.

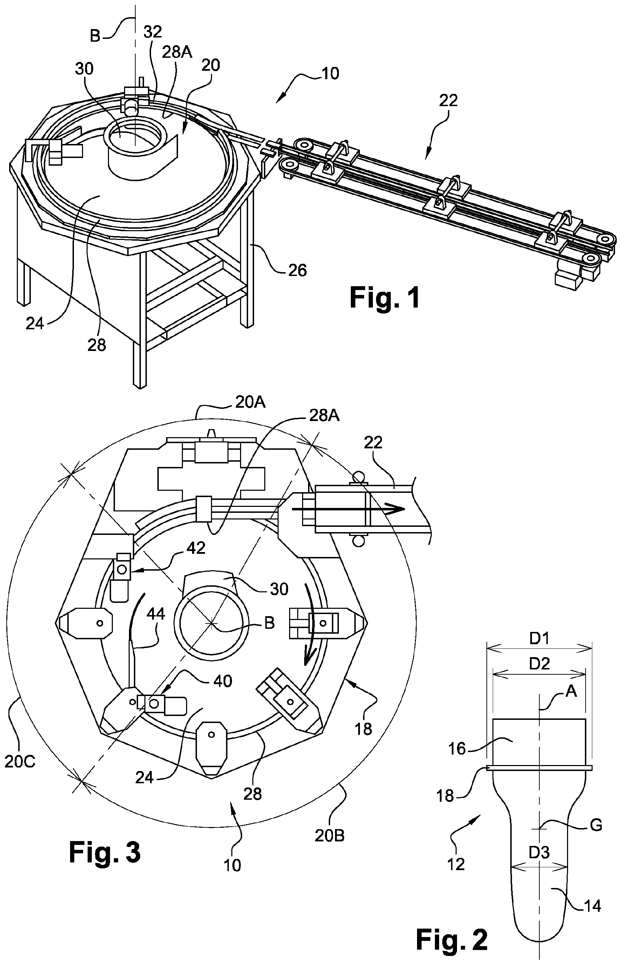

On a représenté à la figure 1 un dispositif 10 d'alignement en une file et de redressement de préformes 12 destiné à faire partie d'une installation (non représentée) de fabrication de récipients en matériau thermoplastique par formage, notamment par soufflage ou par étirage-soufflage, des dites préformes.

Un exemple de préforme 12 destinée à être utilisée avec le dispositif 10 est illustré à la figure 2. Une telle préforme 12 est réalisée en matériau thermoplastique, ici en PET. Elle est classiquement obtenue par moulage par injection. Elle présente une forme sensiblement axisymétrique autour d'un axe "A" principal représenté verticalement à la figure 2.

Elle comporte un corps 14 en forme de tube allongé selon l'axe "A" principal présentant une extrémité axiale fermée et une extrémité opposée, ouverte, représentée en haut à la figure 2, constituée par un col 16 ouvert axialement.

La préforme 12 comporte aussi une face 18 annulaire de support qui est orientée axialement vers l'extrémité fermée de la préforme 12, qui fait saillie radialement par rapport au reste du corps 14, et qui est agencée au-dessus d'un centre "G" de gravité de la préforme 12.

Le terme "annulaire" signifie que la face 18 de support fait le tour de la préforme 12 soit de manière continue, soit de manière discontinue. Dans ce dernier cas, la face 18 annulaire est par exemple formée de segments disjoints qui font le tour de la préforme qui sont néanmoins suffisamment rapprochés pour que la préforme puisse être soutenue entre deux supports diamétralement opposés quelle que soit la position de la préforme autour de son axe principal.

Dans l'exemple représenté, la base du col 16, à la jonction avec le corps 14, présente une collerette qui s'étend radialement en saillie continue par rapport au reste de la préforme 12. La face inférieure de la collerette forme ainsi ladite face 18 de support.

En variante, la collerette peut être agencée ailleurs qu'à la base du col, par exemple au niveau du buvant.

Selon une autre variante, la face de support est par exemple formée par une face inférieure d'un filetage du col.

Selon encore une autre variante, la face de support est rapportée sur la préforme, par exemple par l'intermédiaire d'un bouchon.

Le diamètre "D1" externe de la face 18 de support, dans le cas présent de la collerette, est ainsi supérieur au diamètre "D2" externe maximal du corps 14. Dans l'exemple représenté à la figure 2, le tronçon d'extrémité fermée du corps 14 présente ici un diamètre "D3" externe minimal.

Le col 16 présente sa forme définitive, tandis que le corps 14 est destiné à être étiré (axialement et radialement, lors d'une opération ultérieure de formage (par exemple par étirage et soufflage) pour former le corps du récipient fini.

En outre, le poids du corps 14 des préformes 12 utilisées est supérieur aux poids cumulés du col 16 et de la collerette. Ainsi, le centre "G" de gravité de la préforme 12 est situé quelque part dans le corps 14, sous la face 18 de support comme visible à la figure 2. Ainsi, une préforme 12 soutenue par sa face 18 de support en reposant sur deux supports diamétralement opposés s'orientera naturellement par gravité col 16 en haut.

L'exemple représenté à la figure 2 est non limitatif. On comprendra que le dispositif 10 et le procédé associé sont destinés à être appliqués à tous types de préformes 12 présentant une face 18 de support faisant saillie radialement par rapport au reste du corps 14, et présentant un centre de gravité décalé axialement vers le corps par rapport à ladite face 18 de support.

En revenant à la figure 1, le dispositif 10 comporte principalement un bol 20 de centrifugeuse ainsi qu'un convoyeur 22 de sortie des préformes alignées et redressées.

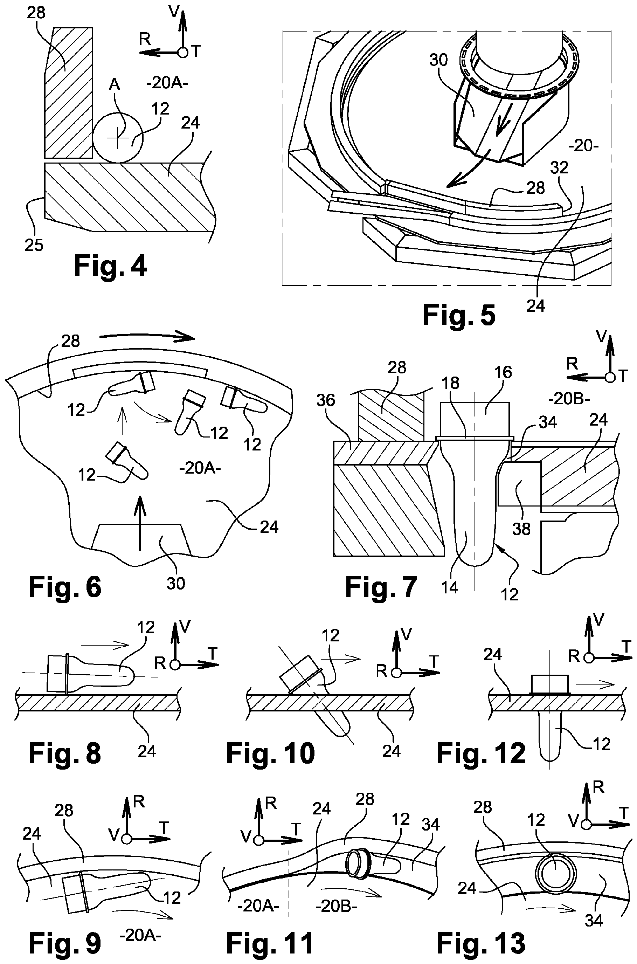

Le bol 20 de centrifugeuse comporte un plateau 24 circulaire horizontal tournant autour d'un axe "B" vertical central. Le plateau 24 tournant présente ainsi un bord 25 extérieur circulaire représenté à la figure 4. La face supérieure du plateau 24 tournant délimite verticalement vers le bas l'intérieur du bol 20 de centrifugeuse. Ainsi, le plateau 24 forme le fond du bol 20.

Le plateau 24 tournant présente un diamètre externe très supérieur aux dimensions des préformes 12.

Le plateau 24 tournant est entraîné en rotation à régime constant, ici dans un sens horaire en vue de dessus, par exemple par un moteur (non représenté) qui est agencé sous le plateau 24 tournant. La vitesse de rotation est par exemple commandée de manière que le bord 25 extérieur du plateau 24 tournant se déplace entre 2 et 3 m/s.

Le plateau 24 tournant est ici porté par une table 26 de support. La table 26 de support présente des pieds qui sont avantageusement réglables en hauteur pour permettre de régler l'assiette du plateau 24 tournant.

Le bol 20 de centrifugeuse est délimité radialement vers l'extérieur par une rambarde 28 périphérique fixe, qui est ici fixée à la table 26 de support. Cette rambarde 28 a notamment, pour première fonction, de retenir les préformes projetées vers l'extérieur par la force centrifuge produite par la rotation du plateau 24 tournant et, pour deuxième fonction, de guider le déplacement des préformes 12 jusqu'à un passage 32 de sortie du bol 20.

Un déversoir 30 est agencé au centre du plateau 24 tournant. Le déversoir 30 est conçu pour recevoir les préformes 12 en vrac et les déverser radialement en direction d'une première portion 28A de réception de la rambarde 28. Le déversoir 30 se présente ici sous la forme d'un toboggan alimenté en préformes 12 par le haut par exemple par l'intermédiaire d'un tapis élévateur (non représenté). Le haut du déversoir 30 présente néanmoins une hauteur relativement faible, par exemple d'environ 40 cm au-dessus du plateau 24.

Comme cela est illustré à la figure 3, pour les besoins de la description, on divisera le bol en trois zones fixes par rapport à la table 26, chacune formée par un secteur angulaire s'étendant autour de l'axe "B" du plateau 24 tournant.

Un premier secteur 20A angulaire, dit d'alignement des préformes 12, s'étend face à la sortie du déversoir 30. Ce secteur 20A angulaire d'alignement inclut la portion 28A de réception de la rambarde 28.

Un deuxième secteur 20B angulaire, de redressement des préformes 12 alignées, est agencé directement en aval du premier secteur 20A angulaire d'alignement. De manière non limitative, il s'étend ici globalement à 180°.

Un troisième secteur 20C angulaire, de triage des préformes incorrectement alignées, est agencé directement en aval du deuxième secteur 20B angulaire de redressement et directement en amont du premier secteur 20A angulaire d'alignement. A l'extrémité aval de ce secteur 20C de triage, le passage 32 de sortie des préformes 12 est ouvert dans la rambarde 28 pour permettre de guider les préformes 12 correctement alignées et redressées vers le convoyeur 22. Le convoyeur 22 passe ici derrière la portion 28A de réception de la rambarde 28.

La dénomination de chacun de ces secteurs 20A, 20B, 20C est arbitraire. Elle a été choisie afin de fournir une indication sur leurs fonctions principales respectives. On comprendra par la suite que des préformes 12 non alignées au niveau du premier secteur 20A angulaire peuvent néanmoins être alignées et redressées au niveau du deuxième secteur 20B angulaire selon les circonstances.

Sur toute la périphérie du premier secteur 20A angulaire d'alignement, un jeu de fonctionnement est réservé entre la rambarde 28 et le plateau 24 tournant. Ce jeu permet la rotation du plateau 24 tournant, mais il est toutefois suffisamment faible pour retenir la totalité du corps des préformes 12 à l'intérieur du bol 20. Ce jeu est ainsi inférieur au diamètre "D3" minimal du corps 14 des préformes 12.

Comme représenté à la figure 4, sur ce secteur 20A d'alignement, la rambarde 28 s'étend verticalement au-dessus du plateau 24 tournant, de manière que le bord 25 externe du plateau 24 tournant est agencé à l'extérieur du bol 20 de centrifugeuse.

Lors du fonctionnement du dispositif 10, comme représenté aux figures 5 et 6, lors d'une première étape, de déversement, les préformes 12 reçues en vrac par le déversoir 30 sont projetées radialement contre une portion 28A de réception de la rambarde 28 sous l'effet conjugué de leur vitesse radiale de glissement en sortie du déversoir 30 et de la force centrifuge produite par la rotation du plateau 24 tournant. Dans le même temps, le plateau 24 tournant commence aussi à entraîner dans sa rotation les préformes 12 tangentiellement vers l'aval.

Lors d'une deuxième étape, d'alignement, les préformes 12 sont maintenues à l'intérieur du bol 20 par la rambarde 28, puis, après un ou plusieurs rebonds contre la rambarde 28, elles perdent progressivement de la vitesse selon la direction radiale. Elles sont alors constamment maintenues radialement contre la rambarde 28 par la force centrifuge. On a représenté le trajet suivi par une même préforme 12 à la figure 6 depuis son arrivée via le déversoir 30 jusqu'à sa position stable contre la rambarde 28. Les préformes 12 sont ensuite entraînées en déplacement purement tangentiel dans un sens horaire par le plateau 24 tournant le long de la rambarde 28.

Dans cette configuration, les préformes 12 occupent naturellement la position la plus stable dans laquelle leur axe "A" principal est orienté selon une direction tangente par rapport au plateau 24 tournant.

La plupart des préformes 12 présentes dans le secteur 20A angulaire d'alignement du bol 20 sont ainsi alignées tangentiellement contre la rambarde 28, leur axe "A" principal étant orienté sensiblement tangentiellement à leur direction de déplacement. L'écart tangentiel entre deux préformes 12 alignées successives est aléatoire car le plateau 24 tournant est parfaitement plan et ne présente pas de crans d'indexation des préformes 12. Les préformes 12 peuvent ainsi être en contact par leurs extrémités sous l'effet de la force centrifuge qui les oblige à glisser les unes par rapport aux autres. Les préformes 12 occupent ainsi de manière optimale toute la longueur périphérique du bol 20.

A ce stade, les préformes 12 sont orientées aléatoirement col 16 vers l'amont ou vers l'aval sans incidence pour la suite du procédé. Les préformes 12 ainsi alignées poursuivent leur déplacement périphérique dans le secteur 20B de redressement.

Afin de diminuer l'ouverture angulaire du secteur 20A angulaire d'alignement, le bol 20 comporte au moins un amortisseur 35 dont la fonction est de réduire, voire d'annuler, le rebond des préformes contre la portion 28A de réception de la rambarde 28, rebond qui est la conséquence de l'effet conjugué de leur vitesse radiale de glissement en sortie du déversoir 30 et de la force centrifuge produite par la rotation du plateau 24 tournant. En atténuant ou évitant le rebond, le temps de contact des préformes 12 avec la rambarde 28 est augmenté. Il en résulte une meilleure occupation de la périphérie du plateau 24 par les préformes 12 alignées, ce qui permet d'augmenter le débit de préformes 12 alignées et redressées.

L'amortisseur 35 est ici agencé contre une face interne de la portion 28A de réception de la rambarde 28, afin que les préformes 12 arrivant par le déversoir 30 soient projetées au contact dudit amortisseur 35.

En variante non représentée de l'invention, la portion de rambarde 28 située en aval de la portion 28A de réception est aussi équipée d'un ou plusieurs amortisseurs supplémentaires pour permettre que des préformes 12 encore en train de rebondir se stabilisent rapidement contre la rambarde 28.

De manière générale, l'amortisseur 35 et, le cas échéant chaque amortisseur supplémentaire, comporte une surface 37, dite de choc, qui est destinée à entrer en contact avec les préformes 12. Cette surface 37 est destinée à être déformée élastiquement radialement vers l'extérieur depuis une position de repos vers une position contrainte de manière à ralentir la préforme 12 incidente. De plus, l'amortisseur 35 comporte aussi des moyens de dissipation d'énergie qui vont ralentir le retour élastique de la surface 37 vers sa position de repos afin de réduire le plus possible le rebond de la préforme 12 incidente.

Avantageusement, la surface 37 de choc est agencée dans le prolongement de la face interne du reste de la rambarde 28 pour que les préformes 12 puissent s'aligner correctement malgré la présence de l'amortisseur 35.

Selon l'invention l'amortisseur 35 comporte un rideau 39 de plastique semi-rigide dont une face forme la surface 37 de choc. Ce rideau 39 est suspendu le long de la rambarde 28.

Une nappe 41 d'air est réservée entre le rideau 39 et la rambarde 28. Cette nappe 41 d'air est ici agencée dans une niche de la rambarde 28 de manière que le rideau 39 soit agencé dans le prolongement de la face interne du reste de la rambarde 28. Cette nappe 41 d'air a pour fonction de dissiper une partie de l'énergie transmise par la préforme 12 au rideau 39, par brassage de l'air sous l'effet du soulèvement du rideau 39 qui fait suite au choc avec une préforme 12 incidente.

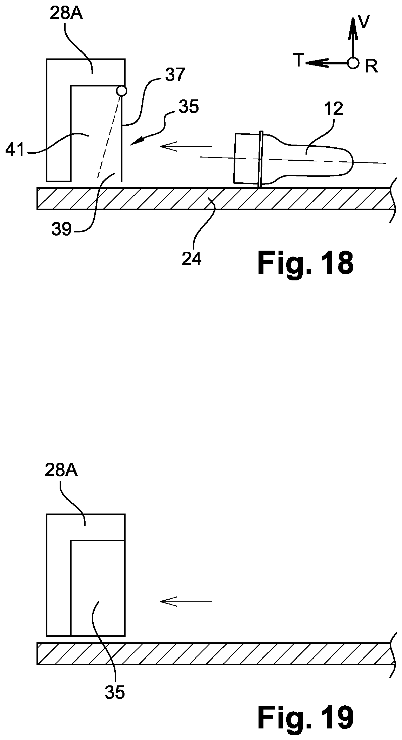

Selon un mode de réalisation représenté à la figure 19, l'au moins un amortisseur supplémentaire comporte au moins un tampon réalisé en un matériau capable d'absorber les chocs et qui est porté par la rambarde 28. Le tampon est ici logé dans une niche de la rambarde 28 pour que la surface 37 de choc affleure à la surface interne de la rambarde 28.

Le tampon est par exemple réalisé en une mousse déformable élastiquement.

En variante non représentée de l'invention, le tampon est formé d'une poche remplie de matériau absorbant les chocs, tel que du gel ou des granulés.

La présence de l'amortisseur 35 permet ainsi de diminuer l'intensité du rebond des préformes 12 incidentes pour leur permettre de venir s'aligner rapidement contre la rambarde 28.

Le fait que les préformes 12 soient maintenues sur le plateau 24 tournant permet de les maintenir plaquées radialement contre la rambarde 28. Ainsi, les préformes 12 sont guidées de manière stable par la rambarde 28 durant leur déplacement autour du bol 20.

Comme représenté à la figure 7, sur le deuxième secteur 20B angulaire, de redressement du bol 20 de centrifugeuse, le bol 20 comporte des moyens de redressement des préformes 12. Les moyens de redressement comportent un interstice 34 périphérique formé par écartement radial de la rambarde 28 par rapport au bord 25 externe du plateau 24 tournant. La largeur radiale de l'interstice 34 est comprise entre le diamètre "D2" maximal du corps 14 et le diamètre "D1" de la face 18 de support, dans le cas présent de la collerette. Cet interstice 34 se prolonge jusqu'au passage 32 de sortie des préformes 12.

Au moins tout le long du deuxième secteur 20B, de redressement, la rambarde 28 présente un rail 36 de support de la face 18 de support. Le rail 36 s'étend en saillie radialement vers l'intérieur au même niveau que la face supérieure du plateau 24 tournant, pour délimiter l'interstice 34 vers l'extérieur. Le rail 36 se prolonge ici jusqu'au passage 32 de sortie.

Ainsi, les préformes 12 sont susceptibles d'être soutenues par leur face 18 de support, dans le cas présent par leur collerette, qui repose en deux points diamétralement opposés sur la face supérieure horizontale du plateau 24 tournant, d'une part, et sur une face supérieure horizontale du rail 36, d'autre part, le corps 14 des préformes 12 pendant sous le niveau du plateau 24 tournant à travers ledit interstice 34. Les deux points d'appui sont alignés radialement. Le rail 36 permet de soutenir les préformes 12 de manière stable.

Ainsi, lors d'une troisième étape, de redressement, comme représenté aux figures 8 et 9, les préformes 12 alignées lors de la deuxième étape arrivent depuis le premier secteur 20A d'alignement en étant alignées en une file le long de la rambarde 28, leur axe "A" principal orienté tangentiellement. Les préformes 12 alignées sont disposées aléatoirement col 16 en amont ou col 16 en aval sans que cela n'ait d'influence sur leur redressement.

Lorsque le corps 14 de chaque préforme 12 arrive au-dessus de l'interstice 34, le corps 14 commence à tomber, comme représenté aux figures 10 et 11, faisant ainsi basculer la préforme 12 autour d'un axe radial passant par les points d'appui de la face 18 de support, dans le cas présent de la collerette, de la préforme. Le basculement se poursuit jusqu'à ce que l'axe "A" principal de la préforme 12 soit vertical, éventuellement après quelques balancement autour de l'axe radial. La préforme 12 est alors soutenue par sa face 18 de support reposant conjointement sur le rail 36 et sur le plateau 24 tournant, comme indiqué aux figures 12 et 13. La préforme 12 est ainsi redressée, col 16 en haut. La préforme 12 est ainsi guidée extérieurement par le rail 36 de la rambarde 28, et elle est guidée intérieurement par le bord 25 périphérique du plateau 24 tournant.

Lors du basculement, l'axe "A" principal de la préforme 12 demeure dans un plan vertical tangent au déplacement. Du fait du basculement de l'axe "A" principal dans le sens de déplacement des préformes 12, la face 18 de support de chaque préforme 12 demeure en permanence en contact avec le plateau 24 tournant, d'une part, et le rail 36, d'autre part, par ses deux points d'appui. Ainsi, chaque préforme 12 est guidée de manière stable et efficace durant son redressement.

Comme représenté à la figure 11, une zone de transition est prévue à l'extrémité amont du secteur 20B angulaire de redressement. Dans cette zone de transition, la largeur de l'interstice 34 évolue progressivement jusqu'à atteindre sa largeur finale. Pour ce faire, la rambarde 28 s'éloigne radialement progressivement de l'axe "B" de rotation du plateau 24 tournant. Ceci permet aux préformes 12 alignées de rester constamment en contact avec la rambarde 28 sous l'effet de la force centrifuge. Les préformes 12 sont ainsi guidées de manière stable en position alignée, même pendant leur redressement.

Si la rambarde 28 présentait une discontinuité, elle ne pourrait plus remplir son rôle de guidage au niveau de cette discontinuité. Les préformes 12 correctement alignées risqueraient alors de tressauter et de se retrouver mal positionnées, en venant par exemple en appui en biais contre des préformes adjacentes ce qui empêcherait leur redressement.

Les préformes 12 ainsi redressées sont entraînées en rotation autour de leur axe principal par frottement contre le bord 25 externe du plateau 24 périphérique. Les préformes 12 sont ainsi déplacées autour du bol 20 dans le sens de rotation du plateau 24 tournant par roulement contre la rambarde 28 périphérique.

Pour améliorer ce phénomène de roulement des préformes 12 et ainsi augmenter la vitesse d'avancement des préformes 12 autour du plateau 24, le bord 25 externe du plateau 24 tournant comporte avantageusement une bande 38 de roulement qui présente un coefficient de frottement adapté pour permettre le roulement sans glissement du corps 14 de la préforme 12 contre la bande 38 de roulement. Un tel agencement est par exemple représenté à la figure 7.

En variante non représentée de l'invention, qui peut remplacer l'agencement de la figure 7 ou être combiné avec ce même agencement, la rambarde est équipée d'une bande de roulement similaire, qui est destinée à venir au contact du corps de préformes redressées.

Les préformes 12 redressées et alignées sont ainsi acheminées vers le troisième secteur 20C, de triage, dans lequel des préformes 12N mal alignées sont réexpédiées directement vers le premier secteur 20A, d'alignement, par différents moyens de triage telles que des roues démêleuses 40, 42 et un déflecteur 44.

Les moyens de triage permettent d'éjecter activement des préformes 12N incorrectement alignées vers le secteur 20A angulaire d'alignement afin de permettre leur retour direct dans le flux des préformes arrivant en vrac par le déversoir 30. L'adverbe "activement" signifie que les moyens de triage sont aptes à fournir une impulsion aux préformes 12N non alignées pour les repousser rapidement vers le premier secteur 20A angulaire.

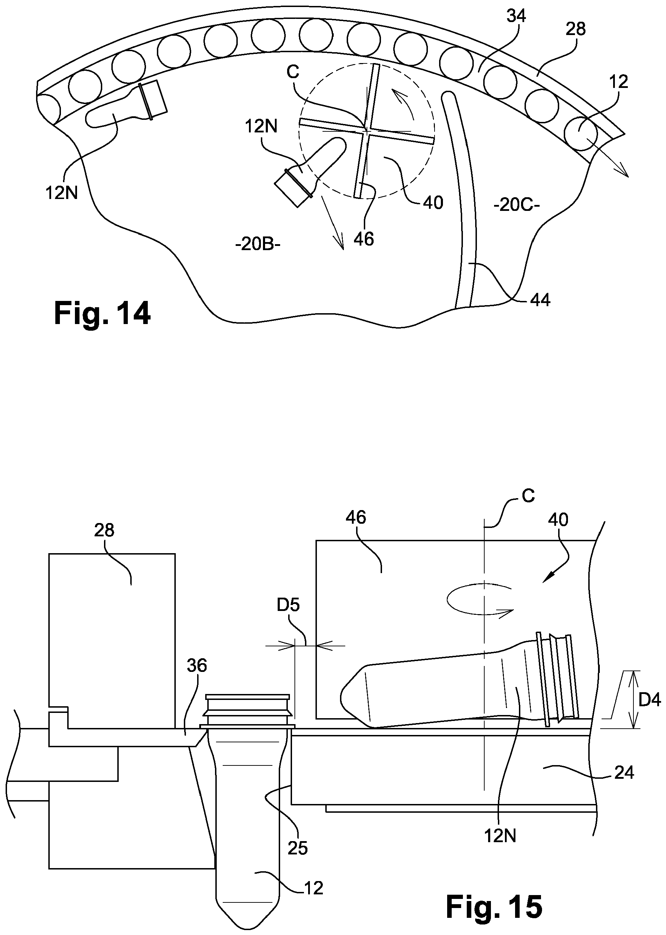

Comme représenté plus en détails à la figure 14, les premier moyens de triage sont ainsi formés par une première roue 40 à palettes 46 dite "roue démêleuse principale" qui est agencée tournante dans le bol 20, au-dessus du plateau 24 tournant autour d'un axe "C" fixe. Il s'agit ici d'un axe "C" vertical. L'espace balayé par les palettes 46 est ainsi cylindrique d'axe "C" vertical. La roue 40 démêleuse principale est agencée à une extrémité amont du troisième secteur 20C angulaire de triage.

Cette roue 40 démêleuse principale permet d'écarter les préformes 12N non alignées, qui sont toujours couchées sur le plateau 24 tournant et appuyées radialement contre les cols 16 des préformes 12 correctement alignées. Ces préformes 12N non alignées présentent ainsi au moins une partie qui fait saillie radialement vers le centre du plateau 24 tournant par rapport aux cols 16 des préformes 12 correctement alignées.

L'espace balayé par les palettes 46 exclut le passage des cols 16 des préformes 12 alignées correctement, ledit passage s'étendant au-dessus de l'interstice 34. En revanche, chaque palette 46 balaie un espace qui est situé au-dessus du plateau 24 tournant à une distance "D4" verticale inférieure au diamètre "D3" minimal d'une préforme 12, et à une distance "D5" radiale du bord 25 du plateau 24 tournant qui est inférieure au diamètre "D3" minimal d'une préforme 12. Ceci permet d'éjecter les préformes 12N incorrectement alignées globalement en direction du centre du plateau 24 tournant, comme cela est représenté à la figure 15. A cet effet, la roue 40 démêleuse principale tourne à contre sens par rapport au plateau 24 tournant.

Les moyens de triage comportent aussi un déflecteur 44 fixe, qui est agencé au-dessus du plateau 24 tournant à une distance verticale inférieure à celle du diamètre "D3" minimal du corps 14 des préformes 12, pour guider les préformes 12N éjectées par la roue 40 démêleuse principale en direction du premier secteur 20A angulaire. Lesdites préformes 12N non alignées sont guidées par le déflecteur 44 jusqu'en aval du passage 32 de sortie selon le sens de rotation du plateau 24 tournant. Ceci permet d'éviter que des préformes 12N non alignées se retrouvent "bloquées" dans ce troisième secteur 20C angulaire de triage.

Comme cela est représenté à la figure 3, le déflecteur 44 s'étend ainsi depuis le bord 25 externe du plateau 24 tournant, juste en aval de la roue 40 démêleuse principale. Il se présente sous la forme d'un bras de spirale orienté vers le centre du plateau 24 tournant en aval du passage 32 de sortie. Un intervalle est réservé radialement entre l'extrémité aval du déflecteur 44 et le déversoir 30 pour permettre le retour des préformes 12N éjectées par la roue 40 démêleuse principale vers le premier secteur 20A angulaire d'alignement.

Le déflecteur 44 garantit que, dans l'espace délimité entre la face aval du déflecteur 44 et la rambarde 28, aucune préforme 12N incorrectement alignée ne soit couchée sur le plateau 24 tournant.

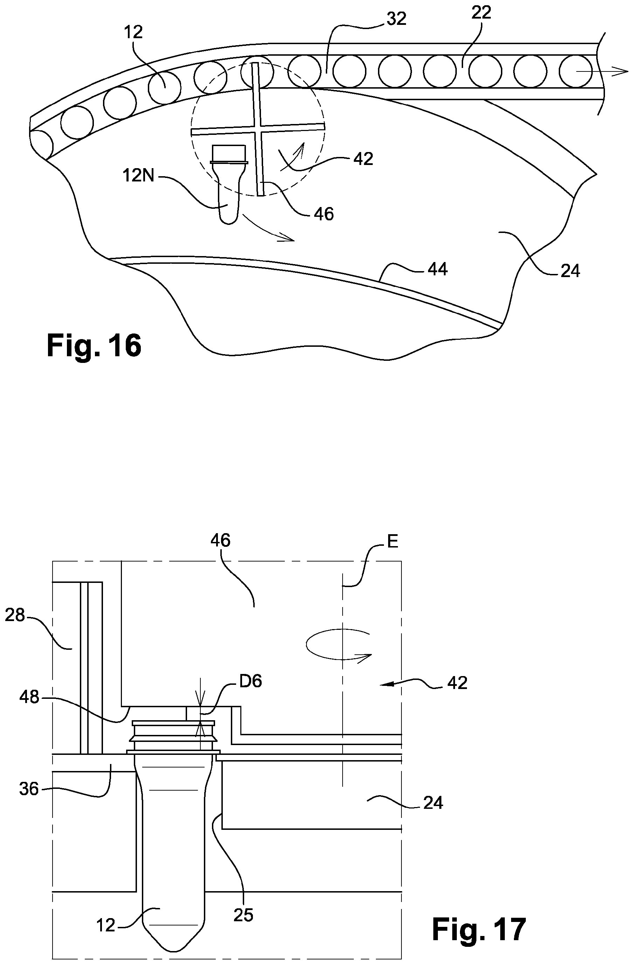

Les moyens de triage comportent aussi une deuxième roue 42 à palettes 46, dite roue 42 démêleuse secondaire, qui est interposée entre le déflecteur 44 et le passage 32 de sortie selon le sens de rotation du plateau 24 tournant. Dans le mode de réalisation représenté à la figure 16, la roue 42 démêleuse secondaire est plus particulièrement agencée directement en amont du passage 32 de sortie, de manière que les préformes 12N éjectées soient projetées directement contre la portion 28A de réception de la rambarde 28 sans risquer d'atteindre le passage 32 de sortie.

Cette deuxième roue 42 à palettes est destinée à éjecter les préformes 12N emboîtées, qui défilent avec les préformes 12 correctement alignées, ou encore des préformes 12N couchées sur les cols 16 des préformes 12 correctement alignées.

La roue 42 démêleuse secondaire tourne ici autour d'un axe vertical "E". L'espace balayé par les palettes 16 est ainsi cylindrique d'axe "E".

Chaque palette 46 balaie un espace qui s'étend verticalement au-dessus et à proximité du col des préformes alignées correctement, à une distance "D6" inférieure au diamètre minimal d'une préforme 12N ou à la hauteur du col de ladite préforme 12N.

Chaque palette 46 présente à son extrémité libre une découpe 48 correspondant à la dimension d'un col 16 de préforme 12 destinée à être alignée correctement, comme cela est illustré à la figure 17. Ceci permet non seulement d'éjecter les préformes emboîtées, mais aussi de garantir que ces préformes seront correctement éjectées sans possibilité de passer sous les palettes 46.

Comme représenté aux figures, le convoyeur 22 est raccordé tangentiellement au plateau dans la continuité du passage 32 de sortie des préformes 12 redressées. Le convoyeur 22 comporte une glissière horizontale formée d'un rail externe qui prolonge le rail 36 de la rambarde 28 et d'un rail parallèle interne qui prolonge tangentiellement le bord 25 externe du plateau 24 tournant. Les rails sont écartés de manière à supporter une préforme 12 redressée par sa face de support, dans le cas présent par sa face 18 de support. Cet agencement permet d'évacuer les préformes 12 redressées en une file sans jamais cesser de les guider.

Le convoyeur 22 peut aussi comporter un dispositif de soufflerie (non représenté) qui permet de mouvoir les préformes 12 redressées. A cet effet, le dispositif de soufflerie comporte plusieurs évents qui soufflent de l'air vers les préformes 12 pour les pousser vers l'aval.

En variante, le convoyeur peut être équipé de tout autre moyen connu de déplacement des préformes alignées et redressées.

Le guidage constant des préformes à toutes les étapes du procédé et lors de la transition entre chacune des étapes permet de garantir que les préformes 12 seront déplacées de manière stable. Ceci permet notamment de faire tourner le plateau 24 tournant à grande vitesse pour augmenter le débit des préformes 12 sans risquer de désaligner des préformes 12 correctement alignées.

En outre, les préformes ne sont pas poussées par des éléments d'indexation. De ce fait, les préformes 12 se déplacent sans risque de grippage et de coincement.

Le dispositif selon l'invention est susceptible d'être adapté facilement à différents modèles de préformes. Il suffit en effet de remplacer des segments de rambarde 28 afin d'adapter la largeur de l'interstice 34 à la dimension du corps 14 et de la face 18 de support de chaque modèle, ainsi que de remplacer les bandes 38 de roulement associées. De tels segments sont aisés à fabriquer et rapides à changer.

## Revendications

1. Dispositif (10) d'alignement en une file et de redressement de préformes (12), le dispositif (10) comportant un bol (20) de centrifugeuse comportant :
- un plateau (24) circulaire horizontal tournant autour d'un axe (B) vertical ;
- une rambarde (28) périphérique fixe ;
- un premier secteur (20A) angulaire d'alignement du bol (20) de centrifugeuse comprenant au moins une portion (28A) de réception destinée à retenir le corps (14) des préformes (12) sur le plateau (24) tournant et à l'intérieur du bol (20) ;
- un déversoir (30) de préformes qui déverse les préformes (12) en vrac sur le plateau (24) tournant en direction de la portion (28A) de réception de la rambarde (28) ;
- un deuxième secteur (20B) angulaire de redressement du bol (20) de centrifugeuse comportant des moyens de redressement desdites préformes (12) ;
**caractérisé en ce que** le bol (20) comporte au moins un amortisseur (35) pour atténuer le rebond des préformes (12) contre la portion (28A) de réception de la rambarde (28), l'amortisseur (35) étant formé par un rideau (39) de matériau semi-rigide portant la surface de choc et recouvrant une nappe (41) d'air réservée entre le rideau (39) et la rambarde (28).

2. Dispositif (10) selon la revendication précédente, **caractérisé en ce que** le bol (20) est équipé d'au moins un amortisseur supplémentaire qui est agencé en aval de la portion (28A) de réception de la rambarde (28) selon le sens de rotation du plateau (24) tournant.

3. Dispositif (10) selon l'une quelconque des revendications précédentes, **caractérisé en ce que** l'au moins un amortisseur (35) comporte une surface (37) de choc qui est destinée à entrer en contact avec les préformes (12) qui est déformable élastiquement entre une position de repos et une position contrainte radialement.

4. Dispositif (10) selon la revendication précédente, **caractérisé en ce que** la surface (37) de choc est agencée dans le prolongement d'une face interne du reste de la rambarde (28).

5. Dispositif (10) selon l'une des revendications 2-4 et au moins selon la revendication 2, **caractérisé en ce que** l'au moins un amortisseur supplémentaire est formé par au moins un tampon réalisé en un matériau capable d'absorber les chocs et qui est porté par la rambarde (28).

6. Dispositif (10) selon la revendication précédente, **caractérisé en ce que** le tampon est réalisé en une mousse déformable élastiquement.

7. Dispositif selon la revendication 5, **caractérisé en ce que** le tampon est formé d'une poche remplie d'un matériau absorbant les chocs.

## Patentansprüche

1. Vorrichtung (10) zum Ausrichten in einer Reihe und Aufrichten von Vorformen (12), wobei die Vorrichtung (10) eine Schalenzentrifuge (20) umfasst, umfassend:
- eine horizontale kreisförmige Platte (24), die sich um eine vertikale Achse (B) dreht;
- eine feste Umlaufreling (28);
- einen ersten Winkelsektor (20A) zur Ausrichtung der Schalenzentrifuge (20), umfassend mindestens einen Aufnahmeabschnitt (28A), der dazu bestimmt ist, den Körper (14) der Vorformen (12) auf der drehenden Platte (24) und innerhalb der Schale (20) zu halten;
- einen Vorformüberlauf (30), der die Vorformen (12) lose auf die drehende Platte (24) in Richtung des Aufnahmeabschnitts (28A) der Reling (28) schüttet;
- einen zweiten Winkelsektor (20B) zum Aufrichten der Schalenzentrifuge (20), umfassend Mittel zum Aufrichten der Vorformen (12) ;
**dadurch gekennzeichnet, dass** die Schale (20) mindestens einen Dämpfer (35) umfasst, um den Aufprall der Vorformen (12) an dem Aufnahmeabschnitt (28A) der Reling (28) zu dämpfen, wobei der Dämpfer (35) von einem Vorhang (39) aus halb steifem Material gebildet ist, der die Aufprallfläche trägt und eine Luftschicht (41) bedeckt, die zwischen dem Vorhang (39) und der Reling (28) vorgesehen ist.

2. Vorrichtung (10) nach dem vorhergehenden Anspruch, **dadurch gekennzeichnet, dass** die Schale (20) mit mindestens einem zusätzlichen Dämpfer ausgestattet ist, der stromabwärts zum Aufnahmeabschnitt (28A) der Reling (28) in Drehrichtung der drehenden Platte (24) angeordnet ist.

3. Vorrichtung (10) nach einem der vorhergehenden Ansprüche, **dadurch gekennzeichnet, dass** der mindestens eine Dämpfer (35) eine Aufprallfläche (37) umfasst, die dazu bestimmt ist, mit den Vorformen (12) in Kontakt zu kommen, die elastisch zwischen einer Ruheposition und einer radial gespannten Position verformbar ist.

4. Vorrichtung (10) nach dem vorhergehenden Anspruch, **dadurch gekennzeichnet, dass** die Aufprallfläche (37) in der Verlängerung einer Innenseite der restlichen Reling (28) angeordnet ist.

5. Vorrichtung (10) nach einem der Ansprüche 2 bis 4, und mindestens nach Anspruch 2, **dadurch gekennzeichnet, dass** der mindestens eine zusätzliche Dämpfer von mindestens einem Puffer gebildet ist, der aus einem Material hergestellt ist, das geeignet ist, die Stöße zu absorbieren, und der von der Reling (28) getragen wird.

6. Vorrichtung (10) nach dem vorhergehenden Anspruch, **dadurch gekennzeichnet, dass** der Puffer aus einem elastisch verformbaren Schaumstoff hergestellt ist.

7. Vorrichtung nach Anspruch 5, **dadurch gekennzeichnet, dass** der Puffer von einer Tasche, die mit einem stoßdämpfenden Material gefüllt ist, gebildet ist.

## Claims

1. Device (10) for aligning preforms (12) in a row and righting same, the device (10) including a centrifuge bowl (20) including:
- a horizontal circular platen (24) rotating about a vertical axis (B);
- a fixed peripheral rail (28);
- a first angular sector (20A) for aligning the centrifuge bowl (20) including at least one receiving portion (28A) intended to retain the body (14) of the preforms (12) on the rotating platen (24) and inside the bowl (20);
- a preform chute (30) which discharges the preforms (12) in bulk onto the rotating platen (24) and towards the receiving portion (28A) of the rail (28) ;
- a second angular sector (20B) for righting the centrifuge bowl (20) including means for righting said preforms (12);
**characterized in that** the bowl (20) includes at least one damper (35) for reducing the rebound effect of the preforms (12) against the receiving portion (28A) of the rail (28), the damper (35) being formed by a semi-rigid material curtain (39) carrying the impact surface and covering a layer (41) of air reserved between the curtain (39) and the rail (28).

2. Device (10) according to the preceding claim, **characterized in that** the bowl (20) is equipped with at least one supplementary damper that is arranged downstream of the receiving portion (28A) of the rail (28) in the direction of rotation of the rotating platen (24).

3. Device (10) according to either one of the preceding claims, **characterized in that** the at least one damper (35) includes an impact surface (37) intended to come into contact with the preforms (12) that is elastically deformable between a rest position and a radially constrained position.

4. Device (10) according to the preceding claim, **characterized in that** the impact surface (37) is arranged in line with an internal face of the rest of the rail (28).

5. Device (10) according to any one of Claims 2-4 and at least according to Claim 2, **characterized in that** the at least one supplementary damper is formed by at least one buffer carried by the rail (28) and which is made of a material able to absorb the impacts.

6. Device (10) according to the preceding claim, **characterized in that** the buffer is made of an elastically deformable foam.

7. Device according to Claim 5, **characterized in that** the buffer is formed of a sachet filled with a material absorbing the impacts.
